# EUROPEAN PATENT SPECIFICATION

(11) **EP 1 614 587 B1**
(45) Date of publication and mention of the grant of the patent: **25.06.2008**
(21) Application number: 05018148.6
(22) Date of filing: 19.07.2002
(51) Int. Cl.: B60R 19/18, B60R 21/34

(54) **Pedestrian safety system having lower leg impact**
FUSSGÄNGERSCHUTZSYSTEM MIT TIEFEREM BEINAUFPRALLPUNKT
Système de protection pour piétons avec impact de la partie inférieure de la jambe.

(30) Priority: 25.07.2001 US 307812 P
(43) Date of publication of application: 11.01.2006
(62) Divisional of application: 02750747.4
(73) Proprietor: Decoma International Inc., Concord, Ontario L4K 4J5 (CA)
(72) Inventor: Henderson, Jack V., West Bloomfield MI 48322 (US); Roddy, Sephen R., Grosse Pointe Part MI 48230 (US)
(74) Representative: Hössle Kudlek & Partner

(56) References cited:
- EP-A- 0 983 909
- EP-A- 1 065 108
- WO-A-00/58144

## Description

### Field of the Invention

The invention relates to a motor vehicle protection assembly. More particularly, this invention relates to a motor vehicle protection assembly having an impact panel secured to a frame of a motor vehicle for absorbing an impact force.

### Description of Related Art

A front end of a motor vehicle protects the motor vehicle and occupants thereof during an impact by absorbing an impact force. More specifically, the front end may be adapted to include structural features for absorbing the impact force. For example, United States Patent 3,831,997 to Myers discloses a controlled collapse front end structure for a motor vehicle. A front portion of a body of the motor vehicle includes frame rail members extending forwardly of a passenger compartment. The frame rail members have corrugated metal sections. During an impact, the corrugated metal sections collapse upon themselves to absorb a portion of the energy of the impact.

The front end of the motor vehicle also includes a bumper secured to a motor vehicle frame to absorb force generated by an impact. The bumper is secured to the motor vehicle frame at a predetermined height relative to the ground so that the bumper is available during an impact. This predetermined height can be, however, disadvantageous when the impact is with a pedestrian. This is due to the fact that upon pedestrian impact, the bumper will typically contact the pedestrian just below the knee.

As a result, various devices have been developed to prevent bumper contact with pedestrians. United States Patent 4,076,295 to Gutman discloses a pedestrian contact guard for engaging a pedestrian before the pedestrian comes into contact with a bumper. The contact guard includes a bumper securing device, which is rigidly secured to the bumper on opposing transverse sides thereof. A vertical support mechanism permits vertical displacement of the contact guard relative to the bumper. A pedestrian contact device having a tubular member is secured to the vertical support mechanism. The tubular member is positioned forward of the bumper (but still within the contour of bumper guards) so that the tubular member contacts a pedestrian before the bumper.

EP 1 065 108 A discloses a motor vehicle according to the preamble of claim 1.

### Summary of the Invention

The motor vehicle according to the invention has the features of claim 1.

### Brief Description of the Drawings

Advantages of the invention will be readily appreciated as the same becomes better understood by reference to the following detailed description when considered in connection with the accompanying drawings wherein:
Figure 1 is a perspective view of a motor vehicle partially cut away incorporating one embodiment of the invention;
Figure 2 is a perspective view, partially exploded, of one embodiment of the invention;
Figure 3 is a perspective view of a motor vehicle, partially cut away, incorporating a second embodiment of the invention;
Figure 4 is an exploded, perspective view of the second embodiment of the invention; and
Figure 5 is a side view of the second embodiment of the invention.

### Detailed Description of the Preferred Embodiment

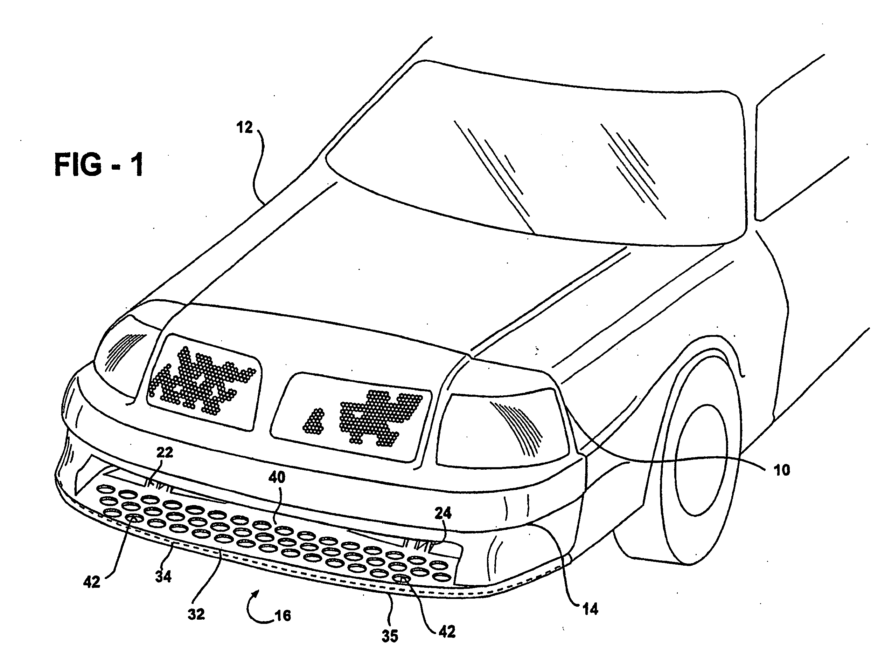

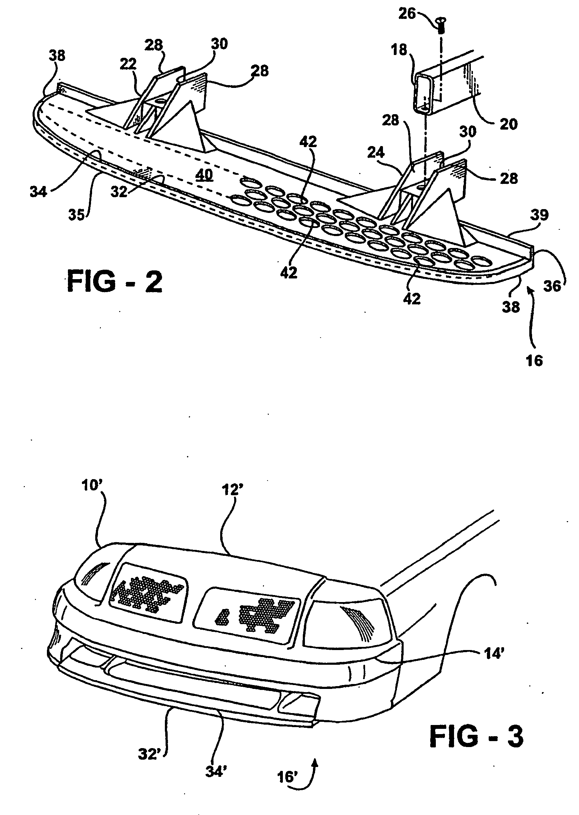

Referring to Figures 1 and 2, a front end 10 of a motor vehicle 12 includes a front bumper 14 for absorbing an impact force during a motor vehicle impact. A motor vehicle protection assembly, generally indicated at 16, is secured to frame rails 18 of a motor vehicle frame 20. The motor vehicle protection assembly 16 extends out from the motor vehicle frame 20 to a position below the front bumper 14.

The motor vehicle protection assembly 16 includes attachment brackets 22, 24 fixedly secured to the frame rails 18 by fasteners 26. Each of the attachment brackets 22, 24 includes a pair of upright flanges 28 defining a channel 30 therebetween. Each of the frame rails 18 is positioned within the channel 30.

The motor vehicle protection assembly 16 also includes an impact panel 32 fixedly secured to the attachment brackets 22, 24. It will be appreciated that the motor vehicle protection assembly 16 may be manufactured such that the attachment brackets 22, 24 are integrally molded to the impact panel 32. In a preferred embodiment of the invention, the impact panel 32 is planar. The impact panel 32 extends between a leading end 34 and a trailing end 36. The leading end 34 of the impact panel 32 may include an energy-absorbing foam layer 35 extending therealong to provide additional cushioning during impact. It will be appreciated that energy-absorbing layers of other materials similar to foam may be used. A pair of opposing sides 38 interconnects the leading 34 and trailing 36 ends. The impact panel 32 further includes a raised flange 39 extending perpendicularly therefrom at the trailing end 36.

The impact panel 32 defines a collapsible region 40 extending generally between the opposing sides 38. The collapsible region 40 also extends along the impact panel 32 between the leading 36 and trailing 38 ends. The impact panel 32 defines a plurality of apertures 42 formed along the collapsible region 40 thereof. The plurality of apertures 42 may be formed along the entire collapsible region 40, or may be formed along only a portion of the collapsible region 40. In a preferred embodiment, each of the plurality of apertures 42 is oval-shaped. Depending on design preferences, the impact panel 32 may be exposed as part of a fascia (not shown) or the impact panel 32 may be covered by the fascia.

In operation, as the front end 10 of the motor vehicle 12 contacts an object, the leading end 34 of the impact panel 32 will contact the object before the front bumper 14. When the object is a pedestrian, the impact panel 32 will contact a lower part of a pedestrian's leg, i.e., away from a knee. This point of impact is preferred to that of the front bumper 14, which would contact a pedestrian at or just below the knee.

As the impact panel 32 contacts the object, the leading end 36 is compressed toward the trailing end 38. At the same time, the plurality of apertures 42 close in upon themselves or cave in and the collapsible region 40 collapses so that the impact panel 32 absorbs much of the impact force created by the collision.

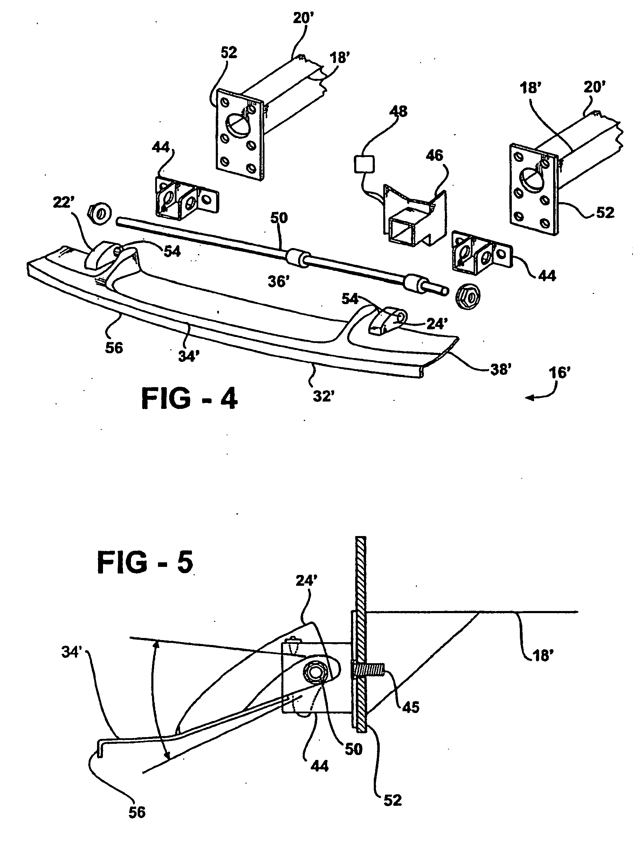

Referring to Figures 3 through 5, wherein like primed reference numerals represent similar elements as those described above, a second embodiment of the invention is shown wherein the motor vehicle protection assembly 16' includes a panel mounting bracket 44, the impact panel 32'. The impact panel 32' is secured to the panel mounting bracket 44. The frame rails 18' include a frame mounting bracket 52 secured thereto for attachment of the panel mounting bracket 44 to the frame 20'. A panel fastener 45 secures the panel mounting bracket 44 to the frame mounting bracket 52.

The impact panel 32' includes integrally molded attachment brackets 22', 24', which are disposed adjacent the trailing end 38'. Each of the attachment brackets 22', 24' defines an aperture 54 for securing the impact panel 32' to the panel mounting bracket 44. The impact panel 32' is movable between a raised position and a lowered position. The impact panel 32' includes a contact flange 56 extending downwardly from the leading end 34'.

The motor vehicle 12' includes a speed sensor 48, which creates a speed signal representative of the speed at which the motor vehicle 12' is traveling. The speed sensor 48 sends the speed signal to the motor 46. Depending on the speed signal, the motor 46 moves the impact panel 32' to the raised position or the lowered position. A drive shaft 50 pivotally moves the impact panel 32' between the raised and lowered positions upon actuation of the motor 46 in response to the speed signal. A drive fastener 51 secures the drive shaft 50 to the panel mounting bracket 44.

In operation, the speed sensor 48 measures the speed of the motor vehicle 12' and generates a speed signal. When the speed signal indicates a low speed, the motor 46 raises the impact panel 32'. When the impact panel 32' is in the raised position, contact of the impact panel 32' with parking blocks, steep angled approaches, and the like is avoided. As a result, damage to the impact panel 32' is prevented. Generally, the predetermined speed will be 10 miles per hour so that when the motor vehicle 12' is traveling between 0 and 10 miles per hour, the impact panel 32' will be in the raised position.

When the speed sensor 48 measures the speed of the motor vehicle 12' to be above a predetermined speed, the motor 46 moves the impact panel 32' to the lowered position. When the impact panel 32' is in the lowered position, the impact panel 32' will contact the object instead of the front bumper 14'. If the object is a pedestrian, the impact panel 32' will contact the pedestrian at a lower part of a leg, i.e., away from the knee. Consequently, contact of the front bumper 14' to the pedestrian, which generally occurs at or just below the knee, is avoided. Generally, when the motor vehicle 12' is traveling above 10 miles per hour, the impact panel 32' will be in the lowered position, where it is available to absorb an impact force from an impact.

## Claims

1. A motor vehicle comprising a protection assembly (16) secured to and extending out from the frame (20) of said motor vehicle (12) for absorbing force during an impact of the motor vehicle (12) with another object, said motor vehicle protection assembly (16) comprising:
a bumper (14),
**at least** one attachment bracket (22, 24) fixedly secured to the frame (20); and
an impact panel (32) fixedly secured to said attachment bracket (22, 24) and extending between a leading end (34) and a trailing end (36), said impact panel (32) including a collapsible region (40) such that upon the object impacting said leading end (34), the force created by the impact is absorbed by said collapsible region (40) reducing the force created by impact received and absorbed by the object, and
said impact panel (32) being configured to extend forwardly of said vehicle (12) and below said bumper (14) of said vehicle (12) enabling said impact panel (32) to contact said object before contacting said bumper (14); and
**characterized by** said leading end (34) including a foam layer (35) extending therealong **and said attachment bracket (22, 24) including a pair of upright flanges (28) defining channel (30), wherein the at least one attachment bracket is integrally molded to the impact panel (32).**

2. A motor vehicle as set forth in claim 1 wherein said impact panel (32) defines a plurality of apertures (42) along at least a portion of said collapsible region (40).

3. A motor vehicle as set forth in claim 2 wherein each of said plurality of apertures (42) is oval-shaped.

4. A motor vehicle as set forth in any one of claims 1 to 3, wherein said protection assembly further includes opposing sides (38) interconnecting said leading (34) and trailing (36) ends.

5. A motor vehicle as set forth in claim 4 wherein said collapsible region (42) extends between said opposing sides (38).

6. A motor vehicle as set forth in any one of claims 1 to 5, wherein said impact panel includes a pivot enabling said impact panel to be movable between a raised position and a lowered position; and said assembly further comprises
a motor fixedly secured to said panel mounting bracket and said impact panel, said motor receiving a speed signal from a speed sensor and driving said impact panel between said raised and lowered positions based on the speed signal.

7. A motor vehicle as set forth in claim 6, wherein said protection assembly further includes a drive shaft pivotally moving said impact panel.

8. A motor vehicle as set forth in claim 6 or 7, wherein said impact panel includes integrally molded attachment brackets.

9. A motor vehicle as set forth in claim 6, 7 or 8, wherein said leading end defines a downwardly extending contact flange.

## Patentansprüche

1. Kraftfahrzeug mit einer Schutzanordnung (16), die an dem Rahmen (20) des Kraftfahrzeugs (12) befestigt ist und sich ausgehend von diesem erstreckt, um eine Kraft während eines Zusammenstosses des Kraftfahrzeugs (12) mit einem anderen Objekt zu absorbieren, wobei die Schutzanordnung (16) des Kraftfahrzeugs
einen Stossfänger (14),
mindestens eine starr an dem Rahmen (20) befestigte Befestigungshalterung (22, 24), und
eine Aufprallplatte (32) umfasst, die starr an der Befestigungshalterung (22, 24) befestigt ist und sich zwischen einem vorderen Ende (34) und einem hinteren Ende (36) erstreckt, wobei die Aufprallplatte (32) einen kollabierbaren bzw. zusammenfaltbaren Bereich (40) umfasst derart, dass aufgrund des auf das vordere Ende (34) aufprallenden Objekts die bei dem Aufprall erzeugte Kraft von dem kollabierbaren Bereich (40) absorbiert wird, um die bei dem Aufprall erzeugte Kraft zu reduzieren, die von dem Objekt empfangen und aufgenommen wird, und
wobei die Aufprallplatte (32) ausgestaltet ist, um sich in einer Vorwärtsrichtung des Kraftfahrzeugs (12) und unter dem Stossfänger (14) des Kraftfahrzeugs (12) zu erstrecken, so dass es der Aufprallplatte (32) ermöglicht wird, das Objekt zu berühren, bevor dieses den Stossfänger (14) berührt, und
**dadurch gekennzeichnet ist, dass** das vordere Ende (34) eine sich entlang diesem erstreckende Schaumschicht (35) umfasst und die Befestigungshalterung (22, 24) ein Paar senkrechter, einen Kanal (30) definierender Flansche (28) umfasst, wobei die mindestens eine Befestigungshalterung integral an die Aufprallplatte (32) angegossen ist.

2. Kraftfahrzeug nach Anspruch 1, wobei die Aufprallplatte (32) eine Vielzahl von Öffnungen (42) entlang mindestens einem Abschnitt des kollabierbaren Bereichs (40) definiert.

3. Kraftfahrzeug nach Anspruch 2, wobei jede Öffnung der Vielzahl von Öffnungen (42) oval ist bzw. eine ovale Form aufweist.

4. Kraftfahrzeug nach einem der Ansprüche 1 bis 3, wobei die Schutzanordnung außerdem entgegengesetzte Seiten (38) umfasst, die das vordere (34) und das hintere Ende (36) verbinden.

5. Kraftfahrzeug nach Anspruch 4, wobei sich der kollabierbare Bereich (42) zwischen den entgegengesetzten Seiten (38) erstreckt.

6. Kraftfahrzeug nach einem der Ansprüche 1 bis 5, wobei die Aufprallplatte ein Gelenk umfasst, das es erlaubt die Aufprallplatte zwischen einer angehobenen Position und einer abgesenkten Position zu bewegen, und wobei die Anordnung außerdem
einen Motor umfasst, der starr an der Befestigungshalterung der Platte und an der Aufprallplatte befestigt ist, wobei der Motor ein Geschwindigkeitssignal von einem Geschwindigkeitssensor empfängt und die Aufprallplatte zwischen der angehobenen und der abgesenkten Position auf Grundlage des Geschwindigkeitssignal antreibt.

7. Kraftfahrzeug nach Anspruch 6, wobei die Schutzanordnung außerdem eine Antriebswelle umfasst, die die Aufprallplatte schwenkend bewegt.

8. Kraftfahrzeug nach Anspruch 6 oder 7, wobei die Aufprallplatte integral gegossene Befestigungshalterungen umfasst.

9. Kraftfahrzeug nach Anspruch 6, 7 oder 8, wobei das vordere Ende einen sich nach unten erstreckenden Kontaktflansch bzw. Berührungsflansch definiert.

## Revendications

1. Véhicule à moteur comprenant un ensemble de protection (16) fixé sur le châssis (20) dudit véhicule à moteur (12) et s'étendant depuis celui-ci, destiné à absorber des forces pendant un impact du véhicule à moteur (12) avec un autre objet, ledit ensemble de protection de véhicule à moteur (16) comprenant :
un pare-chocs (14),
au moins une platine d'attache (22, 24) attachée de manière fixe sur le châssis (20) ; et
un panneau à impact (32) attaché de manière fixe sur ladite platine d'attache (22, 24) et s'étendant entre une extrémité de tête (34) et une extrémité de queue (36), ledit panneau à impact (32) incluant une région (40) capable de s'écraser, de telle sorte que lorsqu'un objet vient en impact contre ladite extrémité de tête (34), la force créée par l'impact est absorbée par ladite région (40) capable de s'écraser, en réduisant la force créée par l'impact reçue et absorbée par l'objet, et
ledit panneau à impact (32) est configuré de manière à s'étendre vers l'avant dudit véhicule (12) et au-dessous dudit pare-chocs (14) dudit véhicule (12), permettant audit panneau à impact (32) de venir en contact avec ledit objet avant de venir en contact avec ledit pare-chocs (14) ; et
**caractérisé en ce que** ladite extrémité de tête (34) inclut une couche en mousse (35) s'étendant le long de celle-ci, et ladite platine d'attache (22, 24) inclut une paire de brides dressées (28) définissant un canal (30), dans lequel ladite au moins une platine d'attache est moulée de manière intégrale sur le panneau à impact (32).

2. Véhicule à moteur selon la revendication 1, dans lequel ledit panneau à impact (32) définit une pluralité d'ouvertures (42) le long d'au moins une portion de ladite région (40) capable de s'écraser.

3. Véhicule à moteur selon la revendication 2, dans lequel chacune de ladite pluralité d'ouvertures (42) est de forme ovale.

4. Véhicule à moteur selon l'une quelconque des revendications 1 à 3, dans lequel ledit ensemble de protection inclut encore des côtés opposés (38) qui interconnectent ladite extrémité de tête (34) et ladite extrémité de queue (36).

5. Véhicule à moteur selon la revendication 4, dans lequel ladite région (42) capable de s'écraser s'étend entre lesdits côtés opposés (38).

6. Véhicule à moteur selon l'une quelconque des revendications 1 à 5, dans lequel ledit panneau à impact inclut un pivot permettant audit panneau à impact d'être mobile entre une position relevée et une position abaissée, et ledit ensemble comprend encore
un moteur attaché de manière fixe sur ladite platine de montage de panneau et ledit panneau à impact, ledit moteur recevant un signal de vitesse provenant d'un capteur de vitesse et entraînant ledit panneau à impact entre ladite position relevée et ladite position abaissée en se basant sur le signal de vitesse.

7. Véhicule moteur selon la revendication 6, dans lequel ledit ensemble de protection inclut encore un arbre d'entraînement déplaçant ledit panneau impact en pivotement.

8. Véhicule à moteur selon la revendication 6 ou 7, dans lequel ledit panneau impact inclut des platines d'attache moulées de manière intégrale.

9. Véhicule moteur selon la revendication 6, 7 ou 8, dans lequel ladite extrémité de tête définit une bride de contact s'étendant vers le bas.
